# EUROPÄISCHE PATENTSCHRIFT

(11) **EP 3 137 391 B1**
(45) Veröffentlichungstag und Bekanntmachung des Hinweises auf die Patenterteilung: **22.01.2020**
(21) Anmeldenummer: 15724945.9
(22) Anmeldetag: 04.05.2015
(51) Int. Cl.: B65D 83/14, B65D 83/68, C09K 21/14, C08G 18/76, C08G 18/48

(54) **APPLIKATIONSVORRICHTUNG FÜR EINEN FESTSTOFFGEFÜLLTEN PU-SCHAUM**
APPLICATION DEVICE FOR A SOLID-FILLED PU FOAM
DISPOSITIF APPLICATEUR POUR MOUSSE DE PU CHARGÉE DE MATIÈRE SOLIDE

(30) Priorität: 02.05.2014 DE 102014006272
(43) Veröffentlichungstag der Anmeldung: 08.03.2017
(73) Patentinhaber: Sika Technology AG, 6340 Baar (CH)
(72) Erfinder: NÜTZEL, Rainer, CH-9057 Weissbad (CH)
(74) Vertreter: Sika Patent Attorneys
(86) Internationale Anmeldenummer: PCT/EP2015/059694
(87) Internationale Veröffentlichungsnummer: WO 2015/166109

(56) Entgegenhaltungen:
- EP-A1- 0 953 625
- EP-A1- 1 013 706
- EP-A1- 1 127 908
- EP-A1- 1 127 937
- DE-U1-202009 013 510

## Beschreibung

Die Erfindung betrifft eine Applikationsvorrichtung für einen zweikomponentigen feststoffgefüllten Sprühschaum, der insbesondere für den Brandschutz bestimmt ist.

Im Bauwesen werden zum Abdichten von Fugen, etwa beim Einbau von Fenstern von Türen zwischen Bauwerk und Einbauteilen Schäume eingesetzt, die auf Polyisocyanaten basieren und mit einem Treibgas geschäumt werden. Diese Schäume dienen neben der Abdichtung auch der Wärmeisolierung und Fixierung von Bauteilen. In der Regel werden diese Schäume aus Druckdosen ausgebracht, was eine einfache und schnelle Handhabung erlaubt.

Brandschutzelemente auf Polyurethanbasis kommen seit vielen Jahren im vorbeugenden Brandschutz zum Einsatz. Es handelt sich hierbei häufig um Formteile aus einem speziellen Polyurethanschaummaterial, das unter Expansion im Brandfall und Carbonisierung aufschäumt, wenn es Temperaturen von mehr als 150 bis 300°C ausgesetzt wird. Der unter Carbonisierung ablaufende Schäumungsvorgang erfolgt unter einem erheblichen Schäumungsdruck, der ausreicht, Hohlräume auszufüllen und gegebenenfalls flexible Elemente, die dem Druck ausgesetzt werden, fest einzuschließen und gegebenenfalls zu komprimieren. Kunststoffleitungen, beispielsweise für Gas oder Wasser, können durch diesen Druck ohne weiteres abgequetscht werden.

Montageschäumen aus Druckdosen werden vielfach Substanzen zugemischt, um ihnen feuerhemmende Eigenschaften zu verleihen. Zumeist werden hierfür organische Phosphate verwandt. Für einen effektiven Brandschutz sind diese Materialien aber zumeist nicht ausreichend.

Für einen effektiven Brandschutz ist es erforderlich, den Schäumen feuerbeständige Materialien in größeren Mengen zuzusetzen. Solche feuerbeständigen Materialien sind zumeist mineralischen Ursprungs. Als einkomponentige Abmischungen fehlt ihnen aber eine für den praktischen Gebrauch ausreichende Lagerbeständigkeit. Ferner neigt der Druckdoseninhalt dazu, einen Bodensatz auszubilden oder zu gelieren.

Brandschutzmassen zum Verschäumen werden auch als sogenannte Kartuschenschäume, sowohl einkomponentig als auch zweikomponentig, angeboten. Ein einkomponentiger Kartuschenschaum auf Basis von Polyisocyanaten und Gipshydrat ist beispielsweise aus WO 93/08142 A1 bekannt. Da die Polyisocyanatkomponente mit dem Hydratwasser des Gipses reagiert, fehlt es an der Lagerbeständigkeit.

Aus diesem Grund ist man auf Kartuschensysteme übergegangen, in denen die Komponenten getrennt voneinander gelagert und gemeinsam ausgebracht werden. Diese Systeme haben sich in der Praxis als zu inhomogen und zu schwer ausbringbar erwiesen. Ein Grund hierfür ist die unterschiedliche Viskosität der beiden Komponenten; die Polyisocyanatkomponente ist in der Regel relativ niedrig viskos eingestellt, die Polyolkomponente mit den mineralischen Zuschlägen hoch viskos. Außerdem neigen die mineralischen Zuschläge langzeitlich zur Sedimentation und sind in der Kartusche nicht wieder aufschüttelbar/homogenisierbar. Die Viskositätsunterschiede können bei der mechanischen Ausbringung nicht vollständig kompensiert werden, was zu einer inhomogenen Abmischung, zu einer Viskositätszunahme gegen Ende der Ausbringung und zu einem in seiner Qualität inhomogenen Schaum führt. Die Viskositätszunahme gegen Ende der Ausbringung führt häufig dazu, dass die Kartuschen nicht vollständig entleert werden können. Des Weiteren gibt es Probleme mit der Dosierung und, wegen der relativ langsamen Schäumung, mit dem Fugenfüllvermögen.

Soweit Brandschutzelemente in Neubauten verwendet werden, ist in der Regel der funktionsgerechte Einbau sicher gestellt. Ein Problem tritt immer dann auf, wenn in bestehende Konstruktionen nachträglich Elemente für den vorbeugenden Brandschutz eingebaut werden müssen, sei es, um Auflagen des vorbeugenden Brandschutzes gerecht zu werden, sei es, um bei den nachträglichen Veränderungen und Installationen vorbeugenden Brandschutz zu betreiben. Insbesondere der Handwerker, der mit dem Verlegen von Leitungen beschäftigt ist, verfügt häufig weder über das Material noch über das Wissen, wie derartige Brandschutzelemente fachgerecht einzubauen sind. Hinzu kommt häufig eine fehlende Verfügbarkeit von Formteilen. Die Folge ist gerade bei nachträglichen Installationen ein unvollständiger Brandschutz, der zu offenen Mauerdurchbrüchen, nicht versiegelten Kabeldurchlässen und anderen die Rauchgas- und Brandausbreitung fördernden Strukturen führt.

Aus der EP 0 953 625 A1 ist eine Applikationsvorrichtung gemäß Oberbegriff des Anspruchs 1 bekannt. Die DE 20 2009 013 510 U1 beschreibt eine Druckdose für feuerhemmenden Montageschaum, der seine Härterkomponente in einer Innenkammer enthält. Aus der EP 1 127 937 A1 geht eine 2-Komponenten-Intumeszenzmaterial hervor, dessen Komponenten in unterschiedlichen Packungen enthalten sind.

Es besteht deshalb ein Bedarf an einem Applikationssystem für den vorbeugenden Brandschutz, das die Nachteile der bekannt gewordenen Systeme vermeidet und vom Handwerk einfach und schnell vor Ort einsetzbar ist, um Fugen und Mauerdurchbrüche fachgerecht abzudichten.

Erfindungsgemäß wird ein solches einfach zu handhabendes System auf Druckdosenbasis bereitgestellt. Entsprechend betrifft die Erfindung eine Applikationsvorrichtung für einen Zweikomponenten-Sprühschaum für den Brandschutz mit
- einer ersten Druckdose mit einer Komponente A, enthaltend ein Polyisocyanat und eine erste Treibgaskomponente,
- einer zweiten Druckdose mit einer Komponente B, enthaltend wenigstens ein Flammschutzmittel in feinteiliger Form, suspendiert in einer Polyolkomponente, und eine zweite Treibgaskomponente, wobei das wenigstens eine Flammschutzmittel Blähgraphit ist,
- eine Halterung für die erste und zweite Druckdose, wobei die Halterung für jede der Druckdosen eine Ventilaufnahme aufweist,
- einem Zwangsmischer, der bei aktvierter Ausbringhilfe die Komponenten A und B vermischt, gekennzeichnet durch eine aktivierbare Ausbringhilfe für den Sprühschaum, die über Schlauchleitungen mit den Ventilaufnahmen für die Druckdosen verbunden ist, wobei die Ausbringhilfe unterschiedlich weite Bohrungen für die Komponenten A und B zur Anpassung an die jeweiligen Viskositäten aufweist und die Bohrungsweite für die Komponente A im Bereich von 0,3 bis 2,0 mm und für die Komponente B bei 1,5 bis 4 mm liegt.

Die erfindungsgemäße Vorrichtung kann vom Handwerker einhändig bedient werden. Dies ist von Vorteil, da auf diese Art und Weise die zweite Hand frei bleibt und für Hilfestellungen eingesetzt werden kann. Die in den beiden Druckdosen enthaltenen Komponenten sind jeweils für sich stabil und lange lagerfähig. Eine Vermischung findet erst bei der Anwendung statt, sodass eine vorzeitige Reaktion ausgeschlossen ist.

Das erfindungsgemäße System beruht auf drei verschiedenen Komponenten, die zusammen wirken. Da sind zum einen die beiden Druckdosen mit den ausgangsbestandteilen für den Schaum, zum anderen die Halterung, in der die Druckdosen eingespannt und aktiviert werden und zum dritten die Ausbringhilfe, mit der die Druckdoseninhalte miteinander gemischt und ausgebracht werden.

In der ersten Druckdose befindet sich eine Komponente A, die ein Polyisocyanat und eine erste Treibgaskomponente enthält. Das Polyisocyanat ist ein übliches Polyisocyanat, d.h. es kann sich um ein monomeres Polyisocyanat oder um ein Prepolymer handeln. Bevorzugte Polyisocyanate sind solche auf Basis von MDI (Diphenylmethan-4,4'-diisoyanat, seine Isomeren und höheren Homologen mit höherer Funktionalität) sowie deren Mischungen und Prepolymere. Geeignet ist insbesondere auch Roh-MDI. Selbstverständlich können andere Polyisocyanate, etwa HDI (Hexamethylendiisocyanat) oder TDI (Toluol-2,4-diisocyanat) eingesetzt werden, ebenso darauf basierende Prepolymere.

Als erstes Treibgas für diese Komponente A kommen übliche Treibgase in Frage, insbesondere Propan, Butan und Dimethylether sowie deren Mischungen. Butan kann in Form aller seiner Isomeren und deren Mischungen eingesetzt werden. Bevorzugt ist Dimethylether in Abmischung mit Butan, insbesondere Isobutan. Zum Einsatz als Treibgas sind ferner HFO-Treibmittel (ungesättigte fluorierte Treibgase mit niedrigem GWP-Wert) geeignet. Dies sind insbesondere die Tetrafluorpropene HFKW 1234yf und 1234ze.

Die zweite Druckdose enthält eine Komponente B mit wenigstens einem Flammschutzmittel in feinteiliger Form, das in einer Polyolkomponente suspendiert ist, und einer zweiten Treibgaskomponente.

Als zweites Treibgas für die Komponente B kommen ebenfalls Propan, Butan und Dimethylether in Frage. Bevorzugt in Dimethylether in Abmischung mit Propan.

Die zweite Komponente B enthält Blähgraphit als Flammschutzmittel.

Als weitere Flammschutzmittel kommen insbesondere mineralische Mittel in Frage, etwa Polyphosphate, Zinkborat, hydratisiertes Aluminiumoxid (Alluminiumhydroxid), Silikate, insbesondere Schichtsilikate, Tonmineralien, etwa Bentonit, Siliziumdioxid, aber auch Melamin. Selbstverständlich können alle diese Bestandteile in Form beliebiger Mischungen eingesetzt werden. Die flammenhemmenden Bestandteile sollten eine Größe von etwa 750 µm nicht übersteigen; insbesondere geeignet ist eine Körnung im Bereich von 40 bis 750 µm. Bevorzugtes Flammschutzmittel ist Graphit, auch wegen seines Blähverhaltens. Die flammenhemmenden Bestandteile sind in einer Polyolkomponente (Polyolblend) suspendiert. Als Polyolkomponente kommen insbesondere Glykole und Glycerin sowie davon abgeleitete Polyether in Frage. Als Basisglykole dienen insbesondere Ethylenglykol, Propylenglykol, Butylenglykol und die daraus abgeleiteten Polyetherole sowie Polyesterpolyole mit einem mittleren Molekulargewicht im Bereich von 350 bis 7.000, insbesondere 800 bis 4.000. Es versteht sich, dass auch die reinen Glykole eingesetzt werden können. In Frage kommen ferner zuckerbasierte Alkohole. Des Weiteren kann die Komponente auch Wasser in Mengen bis 10 %, vorzugsweise bis 4 % und insbesondere in einer Menge von bis zu 1,5 Gewichtsprozent, bezogen auf die Komponente B enthalten. Wasser erzeugt bei der Reaktion mit dem Polyisocyanat CO₂, das die Schaumbildung unterstützt.

Die Polyolkomponente kann neben festen zusätzlich flüssige Flammschutzmittel enthalten. Bevorzugt sind hier in der PU-Chemie üblich Phosphatester, insbesondere Diphenylkresylphoshpat und Trikresylphosphat. Die flüssigen Flammschutzmittel erleichtern die Suspension der mineralischen Mittel.

In der Komponente B macht der flammenhemmende Bestandteil etwa 10 bis 70 Gewichtsprozent, vorzugsweise 40 bis 60 Gewichtsprozent, bezogen auf das Gewicht der Komponente B, aus.

In der Komponente zu A und B können Katalysatoren und übliche Zusatzstoffe enthalten sein. Als Katalysatoren, die die Reaktion von Polyisocyanaten mit Hydroxyverbindungen katalysieren, kommen die üblichen Amin-Katalysatoren in Frage. Des Weiteren können Suspendier-Hilfsmittel enthalten sein, Mittel, die die Rheologie beeinflussen sowie Mittel zur Verminderung oder Erhöhung der Viskosität und kommerziell in der PU-Chemie bekannte Schaumstabilisatoren (Silikonstabilisatoren).

Die Komponente B enthält grundsätzlich die gleichen Treibgase, wie die Komponente A. Bevorzugtes zweites Treibgas ist hier Dimethylether zusammen mit Propan, u.a. wegen seiner viskositätsmindernden Eigenschaften und seiner guten Vereinbarkeit mit dem Polyol.

Neben den Grundgasen Dimethylether, Propan und Butan können die Treibgasmischungen zusätzlich noch die vorstehend erwähnten HFO-Treibmittel enthalten wie auch einen Teil Stickstoff, insbesondere als druckgebenden Bestandteil. Stickstoff ist geeignet, die löslichen Treibgase in die Mischung zu drücken, was die Schaumbildung und die Homogenität des abgegebenen Schaums fördert.

Die Praxis hat gezeigt, dass es zweckmäßig ist, für die einzelnen Komponenten einen minimalen und einen maximalen Druck einzuhalten. Diese Druckbereiche liegen bei der Komponente A zwischen 1,3 und 5,0 bar, insbesondere zwischen 2 und 3 bar. Ein Druck von etwa 2,5 bar hat sich als sehr brauchbar erwiesen.

Für die Komponente B beträgt der Mindestdruck 2,5 bar und der maximale Druck 8,0 bar. Ein bevorzugter Bereich ist der Bereich von 4 bis 6 bar, insbesondere 5,0 bar.

Grundsätzlich sollte der Druck in der Komponente B das 1,5 bis 2,5-fache des Druckes in der Komponente A betragen, insbesondere doppelt so hoch sein.

Das zweite Treibgas der Komponente B enthält einen Anteil Propan insbesondere um den erforderlichen Druck einzuhalten. Das Propan kann durch andere druckgebende Gase, etwa Stickstoff ganz oder teilweise ersetzt werden. In der Komponente A kann dagegen mit einem Isobutansubsatz gearbeitet werden, der völlig ausreicht, um den erforderlichen Arbeitsdruck zu erzeugen. Gegebenenfalls kann auch hier Stickstoff oder Propan zugemischt werden.

Insgesamt ist festzuhalten, dass die Gaszusammensetzung im Wesentlichen durch den einzustellenden Druck in der jeweiligen Komponente bestimmt wird.

Der Treibgasanteil in den Komponenten A und B beträgt in der Regel 2 bis 12 Gewichtsprozent, bezogen auf das Gesamtgewicht der jeweiligen Komponente, wobei für die Komponente A ein Treibgasanteil von 2 bis 10 Gewichtsprozent bevorzugt ist und für die Komponente B ein Gewichtsanteil von 4 bis 8 Gewichtsprozent.

Aufgrund der mineralischen Füllung der Komponente B hat diese eine stark erhöhte Viskosität von bis zu 80.000 mPs, gegenüber einer solchen von etwa 200 mPs der Komponenten A. Dies hat Einfluss auf das Ausbringverhalten und die Abmischung. Es kann deshalb sinnvoll sein, die Komponente A zusätzlich mit einem Mittel zur Thixotropierung und/oder Viskositätserhöhung zu versetzen, etwa mit pyrogenem Kieselgel (Aerosil) und/oder Melamin.

Die Druckdosen mit den Komponenten A und B befinden sich erfindungsgemäß in einer Halterung, die ein Bodenelement und ein Deckelement aufweist. Bodenelement und Deckelement sind zweckmäßigerweise durch eine Schraubspindel verbunden, mit der die Druckdosen parallel zueinander und gleichzeitig in im Deckelement angeordnete Ventilaufnahmen gedrückt werden kann. Die Ventilaufnahmen öffnen die beiden Ventile, so dass die Inhalte aus den Druckdosen austreten können. Bei den Ventilaufnahmen handelt es sich um übliche, wie sie bei der Ausbringung von Montageschäumen aus Druckdosen mit Spritzpistolen zum Einsatz kommen.

Mit der Halterung verbunden ist eine Ausbringhilfe, der die Druckdoseninhalte über zwei separate Schläuche zugeführt werden. Die Ausbringhilfe selbst ist mit einem Auslöser versehen, mit dem die Ausbringung der Doseninhalte gesteuert werden kann. Die Ausbringhilfe führt die beiden Komponenten zusammen und weist am Austrittsende einen üblichen Zwangsmischer auf, in der die beiden Komponenten intensiv miteinander vermischt werden, bevor sie austreten. Mit der Vermischung tritt aufgrund der Reaktion des Isocyanat mit dem Polyol die Schaumbildung ein, die gegebenenfalls durch beigemischtes Wasser und die damit verbundene CO₂-Entwicklung unterstützt wird. Aus dem Zwangsmischer tritt diese Mischung als Schaum aus.

Die Ausbringhilfe kann beispielsweise ein Sprühelement, etwa eine Spritzpistole sein, wie sie beispielswiese für zwei Komponenten in der US 2002/0 038 826 A1 beschrieben ist. Eine einfache und preiswerte Lösung beruht auf der Anwendung einer einfachen Schlauchklemme, mit der die beiden Zufuhrschläuche vor der Mischstrecke geöffnet bzw. unterbrochen werden. Eine solche Vorrichtung hat den Vorteil, dass sie als Wegwerfteil zusammen mit dem System ausgeliefert werden kann. Die Mischstrecke kann dabei als Applikatorrohr genutzt werden oder in ein solches übergehen.

Wegen der unterschiedlichen Viskositäten der beiden Komponenten A und B kann es sinnvoll sein, die Ventilaufnahmen der ersten und zweiten Druckdose so zu gestalten, dass die jeweils genau benötigte Menge durchtreten kann, bzw. die Ventilaufnahme auf die Partikelgrößen abgestimmt ist. Entsprechende Ventilkonstruktionen, etwa Feststoffventile für die Komponente B, sind bekannt. Zweckmäßig ist es auch, eine entsprechende Anpassung im Bereich der Ausbringhilfe auf die gewünschte Durchflussmenge und/oder die Partikelgröße der festen Flammschutzmittel vorzusehen. Dazu ist im Bereich der Einmündung der beiden Schläuche die Bohrungsweite mit 0,3 bis 2,0 mm, insbesondere bis 1,5 mm für die niedrig viskose Komponente A und 1,5 bis 4 mm für die hoch viskose Komponente B entsprechend gestaltet. Die jeweils sinnvolle Bohrungsweite kann vom Fachmann durch einfache Versuche auf die jeweilige Viskosität und/oder Partikelgröße der Komponenten bestimmt werden.

Für die Vermischung und Ausbringung der Komponente B kann es sinnvoll sein, in der zweiten Druckdose Stahlkugeln anzuordnen, mit der der Inhalt durchmischt und eine Wiederaufschüttelbarkeit / Re-Dispergierung der festen Bestandteile in der Polyolmischung gefördert werden kann.

Die Erfindung wird durch das nachfolgende Beispiel näher erläutert.

### Beispiel:

Eine Komponente A für die erste Druckdose wurde aus 350 g Desmodur 44 V 20 L (MDI-Mischung) und 25 g Dimethylether Isobutan-Mischung als erstem Treibgas erstellt.

Für die Komponente B wurden 290 g Polyetherpolyol 1, 150 g Polyetherpolyol 2, 120 g Blähgraphit, 180 g Trikresylphosphat, 8 g Wasser, 5 g Silikonstabilisator (Niax L 6900) und 5 g Katalysator gemischt. 373 g dieser Mischung wurden in der zweiten Druckdose mit 25g Prophan/Butan/Dimethylether-Mischung versetzt.

Nach Einbringen in die Halterung und Anziehen der Spindel sind die erste und zweite Druckdose für die Ausbringung des Schaums aktiviert. Nach Betätigung des Auslösers der Ausbringhilfe entsteht ein gräulicher Schaum, der nach wenigen Minuten aushärtet und den gesetzlichen Bestimmungen zum Brandschutz genügt.

Es versteht sich, dass das Polyisocyanat in der ersten Druckdose und die Hydroxylgruppen-haltigen Bestandteile in der zweiten Druckdose so aufeinander abgestimmt sind, dass eine im Wesentlichen vollständige Umsetzung stattfinden kann. Ein geringer Überschuss an Polyisocyanat ist unbedenklich, insbesondere auch deshalb, weil dieser Überschuss mit der Luftfeuchtigkeit abreagieren kann. Ein geringer Polyolüberschuß ist ebenfalls unbedenklich, da dieses Polyol im Schaum verbleiben kann.

## Patentansprüche

1. Applikationsvorrichtung für einen feststoffgefüllten Zweikomponenten-Sprühschaum für den Brandschutz mit
- einer ersten Druckdose mit einer Komponente A, enthaltend ein Polyisocyanat und eine erste Treibgaskomponente,
- einer zweiten Druckdose mit einer Komponente B, enthaltend wenigstens ein Flammschutzmittel in feinteiliger Form, suspendiert in einer Polyolkomponente, und eine zweite Treibgaskomponente, wobei das wenigstens eine Flammschutzmittel Blähgraphit ist,
- eine Halterung für die erste und zweite Druckdose, wobei die Halterung für jede der Druckdosen eine Ventilaufnahme aufweist,
- einem Zwangsmischer, der bei aktvierter Ausbringhilfe die Komponenten A und B vermischt, **gekennzeichnet durch** eine aktivierbare Ausbringhilfe für den Sprühschaum, die über Schlauchleitungen mit den Ventilaufnahmen für die Druckdosen verbunden ist, wobei die Ausbringhilfe unterschiedlich weite Bohrungen für die Komponenten A und B zur Anpassung an die jeweiligen Viskositäten aufweist und die Bohrungsweite für die Komponente A im Bereich von 0,3 bis 2,0 mm und für die Komponente B bei 1,5 bis 4 mm liegt.

2. Vorrichtung nach Anspruch 1, **dadurch gekennzeichnet, dass** die Komponente A ein Polyisocyanat oder Prepolymer auf Basis von MDI enthält.

3. Vorrichtung nach Anspruch 1 oder 2, **dadurch gekennzeichnet, dass** die Komponente A eine Mischung aus MDI-Isomeren und MDI-Homologen mit höherer Funktionalität enthält.

4. Vorrichtung nach einem der vorstehenden Ansprüche, **dadurch gekennzeichnet, dass** die Komponente B ein Polyol auf Basis von Glykolen oder Glycerin oder zuckerbasierten Alkoholen enthält.

5. Vorrichtung nach einem der vorstehenden Ansprüche, **dadurch gekennzeichnet, dass** die Komponente B eine Polyolmischung aus Polyetherpolyolen und/oder Polyesterpolyolen mit einem mittleren Molekulargewicht im Bereich von 350 bis 7.000, vorzugsweise von 800 bis 4.000 enthält.

6. Vorrichtung nach einem der vorstehenden Ansprüche, **dadurch gekennzeichnet, dass** die Komponente B Wasser in einer Menge von bis zu 10 Gewichtsprozent, vorzugsweise bis zu 4 % enthält.

7. Vorrichtung nach einem der vorstehenden Ansprüche, **dadurch gekennzeichnet, dass** die Komponente B Polyphosphat, Zinkborat, Aluminiumhydroxid, Glaspulver, Schiefer, Quarzsand, Silikate und/oder Melamin in feinteiliger Form als Flammschutzmittel enthält.

8. Vorrichtung nach einem der vorstehenden Ansprüche, **dadurch gekennzeichnet, dass** die Komponente B Flammschutzmittel in einer Menge von 10 bis 70 Gewichtsprozent, vorzugsweise von 40 bis 60 Gewichtsprozent, bezogen auf die Komponente B, enthält.

9. Vorrichtung nach einem der vorstehenden Ansprüche, **dadurch gekennzeichnet, dass** die Komponente B einen Katalysator enthält.

10. Vorrichtung nach einem der vorstehenden Ansprüche, **dadurch gekennzeichnet**, das die Treibgaskomponente der Komponenten A und B Propan, Butan und/oder Dimethylether enthält.

11. Vorrichtung nach Anspruch 10, **dadurch gekennzeichnet, dass** die Treibgaskomponente der Komponente A und/oder B überwiegend aus Dimethylether besteht, wobei die erste Treibgasmischung weiterhin Isobutan enthält und die zweite Treibgasmischung Propan.

12. Vorrichtung nach einem der vorstehenden Ansprüche, **dadurch gekennzeichnet, dass** die Halterung eine Einspannhilfe für Druckdosen aufweist.

13. Vorrichtung nach Anspruch 12, **dadurch gekennzeichnet, dass** die Einspannhilfe als Schraubspindel ausgebildet ist, mit der Druckdosenventile zur Aktivierung in die Aufnahme gedrückt werden.

14. Vorrichtung nach einem der vorstehenden Ansprüche, **dadurch gekennzeichnet, dass** die Ausbringhilfe als Sprühelement oder als Applikationsrohr ausgebildet ist.

15. Vorrichtung nach Anspruch 14, **dadurch gekennzeichnet, dass** die Ausbringhilfe einen Auslöser aufweist.

## Claims

1. Application device for a solid-filled two-component spray foam for fire protection purposes comprising
- a first pressurized can with a component A containing a polyisocyanate and a first propellant gas component,
- a second pressurized can with a component B, containing at least one flameproofing agent in fine-particle form suspended in a polyol component, and a second propellant gas component, wherein the at least one flameproofing agent is expandable graphite,
- a retaining fixture for the first and second pressurized can, with said fixture being provided with a valve receptacle for each of the pressurized cans,
- a forced mixer that mixes component A with component B when the discharging aid is activated, **characterized by** an activatable discharging aid for the spray foam, said discharging aid being connected via hose lines to the valve receptacles for the pressurized cans, wherein the discharging aid has bores of different widths for the components A and B as required by and suited for the respective viscosities and the width of the bores for component A ranges between 0.3 and 2.0 mm and for component B between 1.5 and 4 mm.

2. Device according to claim 1, **characterized in that** component A contains a polyisocyanate or prepolymer on the basis of MDI.

3. Device according to claim 1 or 2, **characterized in that** component A contains a mixture of MDI isomers and MDI homologs with higher functionality.

4. Device according to any one of the preceding claims, **characterized in that** component B contains a polyol based on glycols or glycerol or sugar-based alcohols.

5. Device according to any one of the preceding claims, **characterized in that** component B contains a polyol mixture consisting of polyether polyols and/or polyester polyols having a mean molecular weight ranging between 350 and 7000, preferably between 800 and 4000.

6. Device according to any one of the preceding claims, **characterized in that** component B contains water in an amount of up to 10 percent by weight, preferably of up to 4 % by weight.

7. Device according to any one of the preceding claims, **characterized in that** component B contains polyphosphate, zinc borate, aluminum hydroxide, glass powder, slate, quartz sand, silicates and/or melamine in fine-particle form as flameproofing agent.

8. Device according to any one of the preceding claims, **characterized in that** component B contains flameproofing agents in an amount of between 10 and 70 percent by weight, preferably between 40 and 60 percent by weight based on component B.

9. Device according to any one of the preceding claims, **characterized in that** component B contains a catalyst.

10. Device according to any one of the preceding claims, **characterized in that** the propellant gas component of components A and B contains propane, butane and/or dimethyl ether.

11. Device according to claim 10, **characterized in that** the propellant gas component of component A and/or B for the most part consists of dimethyl ether, with the first propellant gas mixture still containing isobutane and the second propellant gas mixture propane.

12. Device according to any one of the preceding claims, **characterized in that** the retaining fixture is provided with a clamping aid for pressurized cans.

13. Device according to claim 12, **characterized in that** the clamping aid is designed as screw spindle by means of which pressurized can valves are impressed into the receptacle for activation.

14. Device according to any one of the preceding claims, **characterized in that** the discharging aid is designed as spraying element or as application tube.

15. Device according to claim 14, **characterized in that** the discharging aid is provided with a trigger.

## Revendications

1. Dispositif d'application d'une mousse pulvérisée à deux composants, remplie d'une matière solide, qui est destinée à la protection contre le feu, le dispositif comprenant
- une première capsule sous pression comportant un composant A contenant un polyisocyanate et un premier composant gazeux propulsif,
- une deuxième capsule sous pression comportant un composant B contenant au moins un agent pare-flamme sous forme finement divisée, suspendu dans un composant polyol, et un deuxième composant gazeux propulsif, l'au moins un agent pare-flamme étant du graphite expansé,
- un support destiné aux première et deuxième capsules sous pression, le support comportant un logement de soupape pour chacune des capsules de pression,
- un malaxeur à mélange forcé, qui mélange les composants A et B lorsqu'un auxiliaire de distribution est activé, **caractérisé par** un auxiliaire de distribution activable, destiné à la mousse pulvérisée, qui est relié par des conduits en tuyaux souples aux logements de soupape destinés aux capsules sous pression, l'auxiliaire de distribution comportant des perçages de différentes largeurs destinés aux composants A et B en vue de l'adaptation aux viscosités respectives et la largeur de perçage étant dans la gamme de 0,3 à 2,0 mm pour le composant A et dans la gamme de 1,5 à 4 mm pour le composant B.

2. Dispositif selon la revendication 1, **caractérisé en ce que** le composant A contient un polyisocyanate ou un prépolymère à base de MDI.

3. Dispositif selon la revendication 1 ou 2, **caractérisé en ce que** le composant A contient un mélange d'isomères de MDI et d'homologues de MDI de fonctionnalité supérieure.

4. Dispositif selon l'une des revendications précédentes, **caractérisé en ce que** le composant B contient un polyol à base de glycols ou de glycérol ou d'alcools à base de sucre.

5. Dispositif selon l'une des revendications précédentes, **caractérisé en ce que** le composant B contient un mélange de polyols comprenant des polyéther polyols et/ou des polyester polyols dont le poids moléculaire moyen est dans la gamme de 350 à 7000, de préférence de 800 à 4000.

6. Dispositif selon l'une des revendications précédentes, **caractérisé en ce que** le composant B contient de l'eau dans une quantité allant jusqu'à 10 % en poids, de préférence jusqu'à 4 %.

7. Dispositif selon l'une des revendications précédentes, **caractérisé en ce que** le composant B contient comme agent pare-flamme du polyphosphate, du borate de zinc, de l'hydroxyde d'aluminium, de la poudre de verre, de l'ardoise, du sable de quartz, des silicates et/ou de la mélamine, se présentant sous la forme de particules fines.

8. Dispositif selon l'une des revendications précédentes, **caractérisé en ce que** le composant B contient un agent pare-flamme dans une quantité de 10 à 70 % en poids, de préférence de 40 à 60 % en poids, par rapport au composant B.

9. Dispositif selon l'une des revendications précédentes, **caractérisé en ce que** le composant B contient un catalyseur.

10. Dispositif selon l'une des revendications précédentes, **caractérisé en ce que** le composant gazeux propulsif des composants A et B contient du propane, du butane et/ou du diméthyléther.

11. Dispositif selon la revendication 10, **caractérisé en ce que** le composant gazeux propulsif des composants A et/ou B comprend principalement de l'éther diméthylique, le premier mélange gazeux propulsif contenant en outre de l'isobutane et le deuxième mélange gazeux propulsif contenant du propane.

12. Dispositif selon l'une des revendications précédentes, **caractérisé en ce que** le support comporte un auxiliaire de serrage destiné à des capsules sous pression.

13. Dispositif selon la revendication 12, **caractérisé en ce que** l'auxiliaire de serrage est conçu sous la forme d'une tige filetée à l'aide de laquelle les soupapes de capsule sous pression destinées à l'activation sont pressées dans le logement.

14. Dispositif selon l'une des revendications précédentes, **caractérisé en ce que** l'auxiliaire de distribution est conçu comme un élément de pulvérisation ou un tube d'application.

15. Dispositif selon la revendication 14, **caractérisé en ce que** l'auxiliaire de distribution comporte un déclencheur.
